(19) Europäisches Patentamt
European Patent Office
Office européen des brevets

(11) Veröffentlichungsnummer: 0 183 647
B1

(12) **EUROPÄISCHE PATENTSCHRIFT**

(45) Veröffentlichungstag der Patentschrift: **15.02.89**

(51) Int. Cl.⁴: **C 09 D 5/08**, C 23 F 11/16, C 09 D 5/44

(21) Anmeldenummer: **85810522.4**

(22) Anmeldetag: **07.11.85**

# (54) Antikorrosive wässrige Anstrichstoffe.

(30) Priorität: **13.11.84 GB 8428677**

(43) Veröffentlichungstag der Anmeldung: **04.06.86 Patentblatt 86/23**

(45) Bekanntmachung des Hinweises auf die Patenterteilung: **15.02.89 Patentblatt 89/7**

(84) Benannte Vertragsstaaten: **DE FR GB IT NL**

(56) Entgegenhaltungen:
**EP-A-0 003 817**
**EP-A-0 128 862**
**CH-A-458 048**
**DE-A-3 341 633**
**US-A-4 235 838**

(73) Patentinhaber: **CIBA- GEIGY AG, Klybeckstrasse 141, CH- 4002 Basel (CH)**

(72) Erfinder: **Hoyle, William, Dr., 29 Carrwood Avenue Bramhall, Stockport Cheshire SK7 2PY (GB)**
Erfinder: **Jack, James, Dr., 6, Huxley Drive Bramhall, Stockport Cheshire SK7 2PH (GB)**
Erfinder: **Berner, Godwin, Dr., Sommerhalde 5, CH- 4102 Binningen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 183 647 B1

LIBER, STOCKHOLM 1989

**Beschreibung**

Die vorliegende Erfindung betrifft wässrige Anstrichstoffe, welche auf Grund des Gehaltes an bestimmten Korrosionsinhibitoren in der Lage sind, die Korrosion metallischer Substrate insbesondere von Eisenmetallen, zu unterbinden. Diese Inhibitoren sind aliphatische oder cycloaliphatische Carbonsäuren, die einen heterocyclischen Rest enthalten.

Korrosionsschutz ist eine der wichtigsten Aufgaben von organischen Überzugsmitteln für Metallsubstrate. Viele Vorschläge, den Korrosionsschutz von Anstrichen zu verbessern, sind in der Literatur zu finden z. B. in H. Kittel, Lehrbuch der Lacke und Beschichtungen, Band V, Stuttgart 1977, 46-103. Einmal kann die Barrierenfunktion des Überzugsmittels verbessert werden, um korrosive Agentien wie Sauerstoff, Wasser und Ionen von der Metalloberfläche abzuhalten. Zum anderen können antikorrosive Pigmente zugesetzt werden, welche chemisch oder elektrochemisch in den Korrosionsprozess eingreifen, beispielsweise durch Bildung unlöslicher Abscheidungen mit Korrosionsprodukten oder durch Passivierung (Polarisierung) der Metalloberfläche. Zu den wirkungsvollsten antikorrosiven Pigmenten zählen Metallchromate und Bleiverbindungen. Metallchromate wurden vor allem deshalb viel verwendet, weil sie sowohl die anodische wie die kathodische Korrosion inhibieren. Heute hat man gewisse Bedenken gegen die Verwendung von Chromaten wegen ihrer potentiellen krebserregenden Wirkung. In ähnlicher Weise hat man gegen die Verwendung von Bleiverbindungen Bedenken wegen ihrer chronischen Toxizität.

Auch Metallsalze von organischen Verbindungen wurden vielfach als Korrosionsinhibitoren vorgeschlagen. So empfiehlt z. B. die Europ. Patentschrift 3817 die Verwendung von Zink- oder Bleisalzen von Hydroxyl- oder Mercaptoverbindungen von 5- oder 6-gliedrigen heterocyclischen Verbindungen, die die charakteristische Gruppe

```
-N=C-      oder      -N=C-
   |                    |   .
   OH                   SH
```

enthalten. Ein typisches Beispiel hierfür sind die Zn- oder Pb-Salze von 2-Mercaptobenzthiazol.

In einer eigenen Patentanmeldung wurden bestimmte heterocyclische Carbonsäuren und deren Salze beschrieben, die als Korrosionsinhibitoren für Überzugsmittel verwendet werden können, was die Formulierung hochwirksamer Chromat- und Blei-freier antikorrosiver Anstrichstoffe erlaubt.

Solche organische Korrosionsinhibitoren sind keine Pigmente und man ist daher bei ihrer Verwendung in Überzugsmitteln frei in der Wahl der Pigmente oder Füllstoffe. Auf dem Gebiet der Überzugsmittel ist es bisher bezweifelt worden, dass der Zusatz organischer Korrosionsinhibitoren allein einen für die Praxis ausreichenden Korrosionsschutz ermöglicht (Farbe und Lack 87 (1981) 787).

Umweltschutz und Ökonomie der natürlichen Rohstoffe sind heute zwei bestimmende Faktoren für jede chemische Produktion. Im Falle der Lackindustrie haben diese Faktoren einen Trend gezeitigt, der weg von den teuren und giftigen organischen Lösungsmitteln und hin zu wässrigen Anstrichstoffen geht. Es wurde nunmehr gefunden, dass heterocyclische Polycarbonsäuren und deren Salze wirkungsvolle Korrosionsinhibitoren für solche wässrige Anstrichstoffe sind.

Es ist daher überraschend, dass die erfindungsgemässen organischen Korrosionsinhibitoren in wässrigen Anstrichstoffen eine antikorrosive Wirkung haben, die in bestimmten Fällen derjenigen von Chromat- oder Blei-Pigmenten gleichkommt oder diese sogar übertrifft.

Die vorliegende Erfindung bertifft daher einen antikorrosiven wässrigen Anstrichstoff, enthaltend

a) einen wässrigen Filmbildner und
b) als Korrosionsinhibitor eine wirksame Menge einer aliphatischen oder cycloaliphatischen Di-, Tri- oder Tetracarbonsäure, die in ihrem aliphatischen oder cycloaliphatischen Rest durch mindestens eine Gruppe der Formel I substituiert ist,

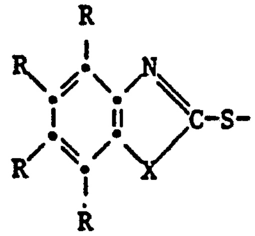

I

worin X Schwefel bedeutet und jedes R unabhängig voneinander Wasserstoff, Alkyl, Halogenalkyl, Alkoxy, Alkylthio, Alkylsulfonyl, Cycloalkyl, Phenyl, Alkylphenyl, Phenylalkyl, Halogen, -CN, $-NO_2$, -COOH, -COOAlkyl, -OH oder eine primäre, sekundäre oder tertiäre Amino- oder Carbamoylgruppe bedeutet, sowie Basen-Additionssalze dieser Verbindungen.

R als Alkyl, Alkoxy, Alkylthio oder Alkylsulfonyl enthält vorzugsweise 1-12 C-Atome vor allem 1-6 C-Atome. Beispiele hierfür sind Methyl, Ethyl, Propyl, Isopropyl, n-Butyl, Isobutyl, tert.-Butyl, Pentyl, Hexyl, Octyl, Nonyl,

Decyl, Undecyl, Dodecyl und die entsprechenden Alkoxy-, Alkylthio- und Alkylsulfonyl-Reste. R als Cycloalkyl enthält vorzugsweise 5-8 C-Atome. Beispiele hierfür sind Cyclopentyl, Cyclohexyl oder Cyclooctyl.

R als Halogenalkyl enthält vorzugsweise 1-4 C-Atome und 1-3 Fluor- oder Chloratome. Beispiele hierfür sind Chlormethyl, Fluormethyl, Di- und Trifluormethyl oder 2-Chlorethyl.

R als Alkylphenyl enthält vorzugsweise 7-16 C-Atome und kann z. B. Tolyl, Xylyl, 4-Isopropylphenyl, 4-tert.-Butylphenyl, 4-Octylphenyl oder 4-Decylphenyl sein. R als Phenylalkyl enthält vorzugsweise 7-9 C-Atome und kann z. B. Benzyl, 1-Phenylethyl, 2-Phenylethyl, α,α-Dimethylbenzyl oder 3-Phenylpropyl sein.

R als Halogen ist vorzugsweise Fluor, Chlor oder Brom. Wenn R -COOAlkyl ist, so hat das Alkyl vorzugsweise 1-4 C-Atome.

R als Aminogruppe oder Carbamoylgruppe hat vorzugsweise bis zu 20 C-Atome. Beispiele hierfür sind die Gruppen $-NH_2$, $-NHCH_3$, $-NHC_{12}H_{15}$, -NH-Cyclohexyl, -NH-Phenyl, $-N(CH_3)_2$, $-N(C_4H_9)_2$, $-N(CH_3)$(Benzyl), Morpholino, Piperidino, $-CONH_2$, -CONHPhenyl, $-CONHC_8H_{17}$, $-CON(C_2H_5)_2$, $-CON(CH_2CH_2OH)_2$, Morpholinocarbonyl oder Piperidinocarbonyl.

Bevorzugt ist einer der Substituenten R Wasserstoff, $C_1$-$C_4$-Alkyl, $C_1$-$C_4$-Alkoxy oder eine Aminogruppe und die anderen drei R sind Wasserstoff. Besonders bevorzugt sind alle vier R Wasserstoff.

Die Komponente b) ist vorzugsweise eine Dicarbonsäure oder deren Salz. Der Substituent der Formel I steht vorzugsweise in Betastellung zu einer Carboxylgruppe.

Die Komponente b) ist vorzugsweise eine durch eine Gruppe der Formel I substituierte aliphatische Polycarbonsäure mit 2-20 C-Atomen oder eine cycloaliphatische Polycarbonsäure mit 4-12, insbesondere 5-8 C-Atomen. Ausser der Gruppe der Formel I kann die Carbonsäure noch andere Substituenten haben, wie z. B. Hydroxyl, Alkoxy, Halogen oder Aryl.

Bevorzugte Komponenten b) sind Verbindungen der Formel II

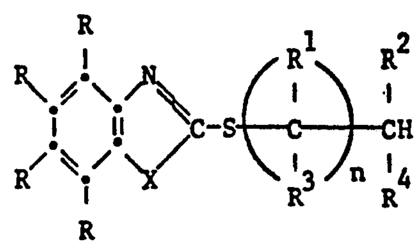

II ,

worin X und R die vorhin gegebene Bedeutung haben,
n null oder eins ist und
$R^1$, $R^2$, $R^3$ und $R^4$ unabhängig voneinander Wasserstoff, Alkyl, Hydroxyalkyl, Halogenalkyl, Alkoxyalkyl, Carboxyalkyl, Carboxyl unsubstituiertes oder mono- oder di-substituiertes Phenyl oder Phenylalkyl bedeuten oder $R^1$ und $R^2$ oder $R^1$ und $R^3$ zusammen unverzweigtes oder verzweigtes Alkylen bedeuten, das durch 1 oder 2 Carboxylgruppen substituiert sein kann, oder $R^1$ und $R^2$ zusammen eine direkte Bindung bedeuten, wobei mindestens zwei der Substituenten $R^1$, $R^2$, $R^3$, $R^4$ eine Carboxyl- oder Carboxyalkylgruppe sind, sowie Basen-Additionssalze dieser Verbindungen.

$R^1$, $R^2$, $R^3$ und $R^4$ als Alkyl sind vorzugsweise $C_1$-$C_{18}$-Alkyl, wie z. B. Methyl, Ethyl, n-Propyl, Isopropyl, n-Butyl, Isobutyl, tert.-Butyl, Pentyl, Hexyl, Octyl, Dodecyl oder Octadecyl. Als Hydroxyalkyl oder Halogenalkyl haben diese Substituenten vorzugsweise 1-4 C-Atome. Beispiele hierfur sind Hydroxymethyl, 1- oder 2-Hydroxy-ethyl, 2- oder 3-Hydroxypropyl, Chlormethyl, Bromethyl oder Bromisopropyl. Als Alkoxyalkyl haben diese Substituenten vorzugsweise 2-10 C-Atome. Beispiele hierfür sind Methoxymethyl, 1-Methoxyethyl, 2-Ethoxypropyl, 1-Methoxybutyl, n-Butoxymethyl oder 4-Isopropoxybutyl.

$R^1$, $R^2$, $R^3$ und $R^4$ als Carboxyalkyl sind vorzugsweise $C_2$-$C_{12}$-Carboxyalkyl wie z. B. Carboxymethyl 1- oder 2-Carboxyethyl, 3-Carboxypropyl, 2-Carboxyisopropyl, 1- oder 2-Carboxybutyl, 1-, 2-oder 3-Carboxyhexyl, 1,2-Dicarboxyethyl oder 2,3,4-Tricarboxybutyl-1. Dieselben Substituenten als unsubstituiertes oder substituiertes Phenyl oder Phenylalkyl können z. B. 4-Chlorphenyl, 3-Nitrophenyl, Tolyl, Xylyl, 3-Methoxyphenyl, 4-Isopropylphenyl, 3-Carboxyethyl, 4-Hydroxyphenyl, 4-Bromhenzyl, 4-tert.-Butylbenzyl, 2-Phenylethyl oder 3-Phenylpropyl, vorzugsweise jedoch Phenyl oder Benzyl sein.

Wenn $R^1$ und $R^2$ oder $R^1$ und $R^3$ zusammen Alkylen sind, so bilden sie zusammen mit den C-Atomen, an die sie gebunden sind, einen Cycloalkanring, vorzugsweise einen Cyclopentan oder Cyclohexanring der durch Alkylgruppen, vorzugsweise $C_1$-$C_4$-Alkylgruppen, oder durch 1 oder 2 Carboxylgruppen substituiert sein kann.

Wenn $R^1$ und $R^2$ zusammen eine direkte Bindung bedeuten, so stellen die Verbindungen der Formel II ungesättigte Carbonsäuren dar.

Bevorzugt sind $R^1$, $R^2$, $R^3$ und $R^4$ Wasserstoff, $C_1$-$C_4$-Alkyl, Carboxyl oder $C_2$-$C_6$-Carboxyalkyl. Besonders bevorzugt ist $R^4$ eine Carboxylgruppe.

Basen-Additionssalze sind Metall-, Ammonium- und organische Ammoniumsalze, insbesondere Salze von Alkalimetallen, Erdalkalimetallen, von Metallen der Gruppen IIB, IIIA oder VIII des periodischen Systems der Elemente, Ammoniumsalze oder Salze von organischen Aminen. Beispiele hierfür sind insbesondere Natrium-, Kalium-, Calcium-, Magnesium-, Zink-, Aluminium-, Ammonium-, Trialkylammonium- und Tris(hydroxyethyl)ammonium-Salze.

Beispiele für Korrosionsinhibitoren der Komponente b) sind:

Benzthiazol-2-ylthiomalonsäure
Benzthiazol-2-ylthiobernsteinsäure
5-Methylbenzthiazol-2-ylthiobernsteinsäure
6-Ethylbenzthiazol-2-ylthiobernsteinsäure
4-Isopropylbenzthiazol-2-ylthiobernsteinsäure
7-t-Butylbenzthiazol-2-ylthiobernsteinsäure
5-n-Hexylbenzthiazol-2-ylthiobernsteinsäure
6-(1,1,3,3-Tetramethylbutyl)-benzthiazol-2-ylthiobernsteinsäure
6-Cyclohexylbenzthiazol-2-ylthiobernsteinsäure
7-Benzylbenzthiazol-2-ylthiobernsteinsäure
6-Methoxybenzthiazol-2-ylthiobernsteinsäure
6-Ethoxybenzthiazol-2-ylthiobernsteinsäure
7-Ethoxybenzthiazol-2-ylthiobernsteinsäure
5-Methoxybenzthiazol-2-ylthiobernsteinsäure
4-Methylthiobenzthiazol-2-ylthiobernsteinsäure
4-Fluorbenzthiazol-2-ylthiobernsteinsäure
5-Chlorbenzthiazol-2-ylthiobernsteinsäure
7-Brombenzthiazol-2-ylthiobernsteinsäure
6-Chlorbenzthiazol-2-ylthiobernsteinsäure
4-Phenylbenzthiazol-2-ylthiobernsteinsäure
5-Trifluormethylbenzthiazol-2-ylthiobernsteinsäure
5-Carboxybenzthiazol-2-ylthiobernsteinsäure
6-Methylsulfonylbenzthiazol-2-ylthiobernsteinsäure
5-Cyanobenzthiazol-2-ylthiobernsteinsäure
6-Nitrobenzthiazol-2-ylthiobernsteinsäure
5-Cyanobenzthiazol-2-ylthiobernsteinsäure
7-Hydroxybenzthiazol-2-ylthiobernsteinsäure
6-Chlor-4-methylbenzthiazol-2-ylthiobernsteinsäure
5-Chlor-6-n-butylbenzthiazol-2-ylthiobernsteinsäure
4-Brom-5-n-hexylbenzthiazol-2-ylthiobernsteinsäure
5-Nitro-6-n-propylbenzthiazol-ylthiobernsteinsäure,
5-Brom-6-n-propoxybenzthiazol-2-ylthiobernsteinsäure
6-Amino-benzthiazol-2-ylthiobernsteinsäure
6-Methylaminobenzthiazol-2-ylthiobernsteinsäure
5-Dimethylaminobenzthiazol-2-ylthiobernsteinsäure
7-Phenylaminobenzthiazol-2-ylthiobernsteinsäure
6-Diphenylamino-benzthiazol-2-ylthiobernsteinsäure
4-Benzylaminobenzthiazol-2-ylthiobernsteinsäure
4-Morpholinobenzthiazol-2-ylthiobernsteinsäure
5-Carbamoylbenzthiazol-2-ylthiobernsteinsäure
5-Methylcarbamoylbenzthiazol-2-ylthiobernsteinsäure
5-Diethylcarbamoylbenzthiazol-2-ylthiobernsteinsäure
6-Phenylcarbamoylbenzthiazol-2-ylthiobernsteinsäure
5,6-Dimethyl-benzthiazol-2-ylthiobernsteinsäure
4,5,6-Triethylbenzthiazol-2-ylthiobernsteinsäure
4,5,6,7-Tetramethylbenzthiazol-2-ylthiobernsteinsäure
1-(Benzthiazol-2-ylthio)-propan-1,2-dicarbonsäure
3-(Benzthiazol-2-ylthio)-propan-1,2-dicarbonsäure
3-(6-Trifluormethylbenzthiazol-2-ylthio)-propan-1,2-dicarbonsäure
3-(6-Methoxycarbonylbenzthiazol-2-ylthio)-propan-1,2-dicarbonsäure
3-(6-Aminobenzthiazol-2-ylthio)-propan-1,2-dicarbonsäure
3-(5-Ethylaminobenzthiazol-2-ylthio)-propan-1,2-dicarbonsäure
3-(4-Dibutylaminobenzthiazol-2-ylthio)-propan-1,2-dicarbonsäure
4-(Morpholinobenzthiazol-2-ylthio)-propan-1,2-dicarbonsäure
1-(4-Phenylbenzthiazol-2-ylthio)-propan-1,2-dicarbonsäure
1-(Benzthiazol-2-ylthio)-propan-1,3-dicarbonsäure
1-(6-Ethylbenzthiazol-2-ylthio)-propan-1,3-dicarbonsäure
2-(Benzthiazol-2-ylthio)-propan-1,3-dicarbonsäure
2-(5-Carboxybenzthiazol-2-ylthio)-propan-1,3-dicarbonsäure
3-(Benzthiazol-2-ylthio)-3-phenylpropan-1,2-dicarbonsäure
3-(Benzthiazol-2-ylthio)-3-(4-carboxyphenyl)-propan-1,2-dicarbonsäure
3-(Benzthiazol-2-ylthio)-3-(2,4-dicarboxyphenyl)-propan-1,2-dicarbonsäure
3-(Benzthiazol-2-ylthio)-3,3-diphenylpropan-1,2-dicarbonsäure
1-(Benzthiazol-2-ylthio)-butan-1,2-dicarbonsäure
1-(4-Methoxy-6-hydroxybenzthiazol-2-ylthio)-butan-1,2-dicarbonsäure

3-(4,5-Dimethyl-7-propoxybenzthiazol-2-ylthio)-propan-1,2-dicarbonsäure
1-(Benzthiazol-2-ylthio)-2-methylpropan-1,2-dicarbonsäure
2-(Benzthiazol-2-ylthio)-butan-2,3-dicarbonsäure
1-(Benzthiazol-2-ylthio)-butan-2,4-dicarbonsäure
4-(Benzthiazol-2-ylthio)-butan-1,2,3-tricarbonsäure
4-(Benzthiazol-2-ylthio)-butan-1,4-dicarbonsäure
1-(Benzthiazol-2-ylthio)-pentan-1,5-dicarbonsäure
3-(Benzthiazol-2-ylthio)-hexan-1,2-dicarbonsäure
8-(Benzthiazol-2-ylthio)-octan-1,3,5,7-tetracarbonsäure
1-(Benzthiazol-2-ylthio)-cyclohexan-1,2-dicarbonsäure
4-(Benzthiazol-2-ylthio)-cyclohexan-1,2-dicarbonsäure
1-(Benzthiazol-2-ylthio)-propan-1,2,3-tricarbonsäure
1-(Benzthiazol-2-ylthio)-3-chlorpropan-1,2-dicarbonsäure
1-(Benzthiazol-2-ylthio)-3-methoxypropan-1,2-dicarbonsäure
1-(Benzthiazol-2-ylthio)-3-hydroxypropan-1,2-dicarbonsäure
1-(Benzthiazol-2-ylthio)-2-phenylbernsteinsäure
1-(Benzthiazol-2-ylthio)-2-benzylbernsteinsäure
1-(Benzthiazol-2-ylthio)-3-methylbutan-1,3-dicarbonsäure
3-(Benzthiazol-2-ylthio)-hexan-3,4-dicarbonsäure
2,3-Bis-(benzthiazol-2-ylthio)-butan-1,4-dicarbonsäure
Di-Natrium Benzthiazol-2-ylthiosuccinat
Di-Kalium Benzthiazol-2-ylthiosuccinat
Calcium Benzthiazol-2-ylthiosuccinat
Zink Benzthiazol-2-ylthiosuccinat
Cobalt Benzthiazol-2-ylthiosuccinat
Aluminium Benzthiazol-2-ylthiosuccinat
Ammonium Benzthiazol-2-ylthiosuccinat
Bis-methylammonium Benzthiazol-2-ylthiosuccinat
Bis- triethanolammonium Benzthiazol-2-ylthiosuccinat
Bis- octylammonium Benzthiazol-2-ylthiosuccinat
Bis-cyclohexylammonium Benzthiazol-2-ylthiosuccinat
Diethylammonium Benzthiazol-2-ylthiosuccinat
Tributylammonium Benzthiazol-2-ylthiosuccinat
Di-Natrium 3-(Benzthiazol-2-ylthio)-propan-1,2-dicarboxylat
Di-Kalium 3-(Benzthiazol-2-ylthio)-propan-1,2-dicarboxylat
Calcium 3-(Benzthiazol-2-ylthio)-propan-1,2-dicarboxylat
Zink 3-(Benzthiazol-2-ylthio)-propan-1,2-dicarboxylat
Aluminium 3-(Benzthiazol-2-ylthio)-propan-1,2-dicarboxylat
Ammonium 3-(Benzthiazol-2-ylthio)-propan-1,2-dicarboxylat
Bis-methylammonium 3-(Benzthiazol-2-ylthio)-propan-1,2-dicarboxylat
Bis-(triethanolammonium) 3-(Benzthiazol-2-ylthio)-propan-1,2-dicarboxylat

Einige der erfindungsgemäss als Korrosionsinhibitor verwendeten Verbindungen der Formel II sind bekannte Verbindungen, andere sind neue Verbindungen. Die Herstellung der Verbindungen kann gemäss einem Verfahren, das Gegenstand der EP-A-129 506 ist, durch Umsetzung einer Verbindung der Formel III,

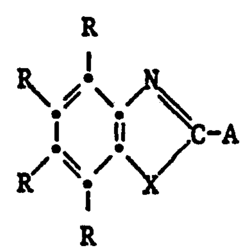

III

worin A eine Abgangsgruppe wie z. B. Cl, Br, I oder p-Tosyloxy ist, mit einer Verbindung der Formel

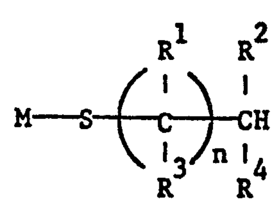

worin M Wasserstoff oder ein Kation, wie z. B. ein Alkalimetall-Erdalkalimetall- oder Ammonium-Kation, ist, geschehen. Alternativ kann eine Verbindung der Formel IV

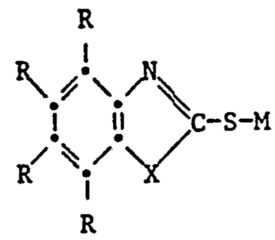

IV

mit einer Verbindung der Formel

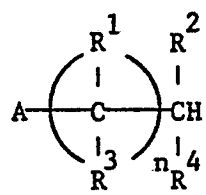

umgesetzt werden.

Verbindungen der Formel II, worin X Schwefel und $R^4$ Carboxyl ist, können auch durch Umsetzung von IV, worin M Wasserstoff ist und X = S ist, mit einer α,β-ungesättigten Säure der Formel

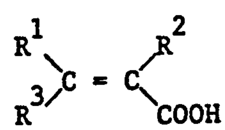

nach einem Verfahren, das Gegenstand der EP-A-126 030 ist, hergestellt werden.

Die Komponente a) kann ein beliebiger Filmbildner sein, wie solche als Bindemittel für wässrige Anstrichstoffe bekannt sind, beispielsweise für Dispersionsfarben, Emulsionsanstriche oder Elektrotauchlacke. Das als Komponente a) verwendete Bindemittel kann ein wasserlösliches oder wasserdispergierbares synthetisches Polymer oder Gemisch solcher Polymere sein. Beispiele solcher Polymere sind Alkyd-, Polyester-, Acryl-, Polyurethan-, Epoxid-, Phenol- oder Aminoplast-Harze, Homo- oder Copolymere von Vinylethern, Vinylestern, Styrol, Vinylidenchlorid oder Vinylchlorid.

Das wässrige Bindemittel kann als Vernetzungsmittel ein Aminoplast-Harz, ein Phenoplast-Harz, ein blockiertes Isocyanat, ein Epoxidharz, eine Mannichbase eines Phenols oder einen aktivierten Carbonsäureester enthalten.

Es gibt verschiedene Methoden um solche Bindemittel-Harze wasserlöslich oder wasserdispergierbar zu machen. Dazu gehört auch die Einführung von basischen oder sauren funktionellen Gruppen, welche vor der Verdünnung mit Wasser neutralisiert werden.

Der Anstrichstoff kann ausser den Komponenten a) und b) noch weitere Komponenten enthalten wie z. B. Pigmente, Farbstoffe, Füllstoffe und sonstige Additive wie sie für wässrige Überzugsmittel üblich sind. Die Pigmente können organische, anorganische oder metallische Pigmente sein wie z. B. Titandioxid, Eisenoxid, Aluminiumbronze, Phthalocyaninblau etc. Es können auch Korrosionsschutz-Pigmente mitverwendet werden wie z. B. phosphathaltige oder borathaltige Pigmente, Metall- und Metalloxid-Pigmente (siehe Farbe und Lack 88 (1982), 183) oder die in der EP-A-54267 beschriebenen Pigmente. Als Füllstoffe können beispielsweise Talkum, Kreide, Tonerde, Baryt, Glimmer oder Kieselerde mitverwendet werden. Weitere Additive sind z. B. Verlaufshilfsmittel, Dispergiermittel, Thixotropiemittel, Haftverbesserer, Antioxidantien, Lichtschutzmittel oder

Härtungskatalysatoren.

Von besonderer Bedeutung ist der Zusatz basischer Füllstoffe oder Pigmente. Diese bewirken in bestimmten Bindemittelsystemen wie z. B. in Acryl- und Alkydharzen einen synergistischen Effekt auf die Korrosionsinhibierung. Beispiele für solche basische Füllstoffe oder Pigmente sind Calcium- oder Magnesiumcarbonat, Zinkoxid, Zinkcarbonat, Zinkphosphat, Magnesiumoxid, Aluminiumoxid, Aluminiumphosphat oder Gemische davon. Beispiele für Pigmente sind z. B. solche auf Basis von Aminoanthrachinon.

Die erfindungsgemässen Korrosionsinhibitoren können auch zuerst auf solche basische Füllstoffe oder Pigmente aufgebracht werden, beispielsweise durch Chemisorption aus wässriger Lösung, und die so erhaltenen Zubereitungen dem Überzugsmittel zugesetzt werden.

In einer weiteren bevorzugten Ausführungsform der Erfindung werden die Korrosionsinhibitoren zusammen mit basischen Ionenaustauschern verwendet oder man behandelt einen solchen Ionenaustauscher zuerst mit einer Lösung des Inhibitors und setzt diese Zubereitung dem Anstrichstoff zu. Beispiele für basische Ionenaustauscher sind alle typischen Anionenaustauscher, wie sie z. B. unter den Namen Dowex® 1 oder 11 oder Amberlite® IRA im Handel sind.

Schliesslich kann der Korrosionsinhibitor auch auf einem neutralen Trägerstoff aufgebracht werden. Als Trägerstoffe eignen sich insbesondere pulverförmige Füllstoffe oder Pigmente. Diese Technik ist in der DE-OS-3 122 907 näher beschrieben.

Der Anstrichstoff kann ausser der Komponente b) noch einen anderen organischen, metallorganischen oder anorganischen Korrosionsinhibitor enthalten wie z. B. Salze der Nitroisophthalsäure, Tannin, Phosphorester, technische Amine, substituierte Benztriazole oder substituierte Phenole, wie sie z. B. in der DE-OS-3 146 265 beschrieben sind.

Die erfindungsgemässen Anstrichstoffe werden vorzugsweise als Grundierung (Primer) auf metallischen Substraten, insbesondere auf Eisen, Stahl, Kupfer und Aluminium verwendet. Sie können dabei als sogenannte Konversions-Anstriche fungieren, indem an der Grenzfläche von Metall und Überzug chemische Reaktionen stattfinden. Der Auftrag der Anstriche kann nach den üblichen Methoden erfolgen wie Spritzen, Streichen, Aufrollen, Tauchen oder durch Elektroabscheidung, insbesondere kathodische Abscheidung. Je nachdem, ob der Filmbildner ein physikalisch trocknendes oder ein hitze- oder strahlenhärtbares Harz ist, erfolgt die Aushärtung der Anstriche bei Raumtemperatur, durch Einbrennen oder durch Bestrahlung.

Die Korrosionsinhibitoren können dem Anstrichstoff während dessen Herstellung zugesetzt werden, z. B. während der Pigmentverteilung durch Mahlen oder man löst die Inhibitoren in einem Lösungsmittel vor und rührt die Lösung in den Anstrichstoff ein. Man verwendet den Inhibitor in einer Menge von 0,1 - 20 Gew.-%, vorzugsweise 0,5 - 5 Gew.-%, bezogen auf den Feststoffgehalt des Anstrichstoffes.

Beispiel: Ein wässriger Primer wird durch Mischen der folgenden Komponenten (A) und (B) bereitet.

| | |
|---|---|
| (A) | Pigmentpaste |
| 14,6 g | Titandioxid-Pigment (Ti-Pure® R-960, Du Pont de Nemours Co) |
| 1,4 g | 35-%-ige wässrige Lösung eines Dispergiermittels (Dispersing Agent QR 681, Rohm & Haas Corp.) |
| 0,2 g | Netzmittel (Triton® Cl 10, Rohm & Haas Corp.) |
| 4,7 g | dest. Wasser |
| 0,2 g | Antischaum-Mittel (Colloids 643, Colloids Inc.) |
| 1,2 g | Zinkoxid |
| 5,1 g | mikronisiertes $CaCO_3$ (Millicarb®, Plüss-Staufer) |
| 27,4 g | |
| (B) | Bindemitteldispersion |
| 64,4 g | 43-%-ige wässrige Dispersion eines Acrylharzes (Primal® MV 23, Rohm & Haas Corp.) |
| 1,0 g | 2-Butoxyethoxy-ethanol |
| 2,7 g | Ethylenglykol |
| 0,2 g | Schimmelverhütungsmittel (Skane® M-8, Rohm & Haas) |
| 0,4 g | Antischaum-Mittel (Colloids 643, Colloids Inc.) |
| 0,2 g | Verdickungsmittel (Primal® ICS-1, Rohm & Haas Corp.) |
| 1,1 g | Verlaufhilsmittel (Primal® RM-8, Rohm & Haas Corp). |
| 2,6 g | dest. Wasser |
| 72,6 g | |

Der gemischte Primer hat einen Feststoffgehalt von 48 %. Zu dieser Dispersion werden die in der folgenden Tabelle angegebenen Korrosionsinhibitoren gegeben.

Der Primer wird in einer Stärke von 100 µm auf phosphatierte Eisenbleche aufgetragen. Die Proben werden bei 130°C 20 min eingebrannt und werden anschliessend einem Salzsprühtest gemäss ASTM B-117 unterworfen. Nach 600 h wird der Blasengrad am Kreuzschnitt sowie der Korrosionsgrad auf der ganzen Fläche in einer 6-Stufen-Skala nach DIN 53,209 und 53,210 bewertet.

Dann wird der Anstrich durch Behandlung mit Natronlauge entfernt und die Korrosion des Metalles nach DIN 53,167 ebenfalls in einer 6-Stufen-Skala bewertet. Die Summe der beiden Werte ergibt den Korrosions-Schutzwert KS.

| Korrosionsinhibitor | Menge *) | Beurteilung Anstrich | Beurteilung Metall | KS |
|---|---|---|---|---|
| keiner | - | 3,6 | 3,9 | 7,5 |
| Benzthiazol-2-ylthio-bernsteinsäure - Zn-Salz | 2 % | 3,7 | 4,3 | 8,0 |
| -$NH_4$-Salz | 2 % | 4,1 | 4,3 | 8,4 |
| | 3 % | 4,3 | 5,2 | 9,5 |
| 3-(Benzthiazol-2-ylthio)-propan-1,2-dicarbonsäure -$NH_4$-Salz | 5 % | 4,4 | 4,5 | 8,9 |

*) bezogen auf Festkörper des Anstriches

**Patentansprüche**

1. Antikorrosiver wässriger Anstrichstoff enthaltend
a) einen wässrigen Filmbildner und
b) als Korrosionsinhibitor eine wirksame Menge einer aliphatischen oder cycloaliphatischen Di-, Tri- oder Tetracarbonsäure, die in ihrem aliphatischen bzw. cycloaliphatischen Rest durch mindestens eine Gruppe der Formel I substituiert ist,

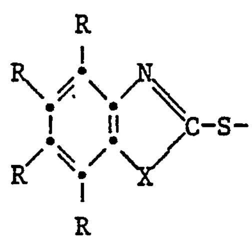
I

worin X Schwefel bedeutet und jedes R unabhängig voneinander Wasserstoff, Alkyl, Halogenalhyl, Alkoxy, Alkylthio, Alkylsulfonyl, Cycloalkyl, Phenyl, Alkylphenyl, Phenylalkyl, Halogen, -CN, -$NO_2$, -COOH, COOAlkyl, -OH oder eine primäre, sekundäre oder tertiäre Amino- oder Carbamoylgruppe bedeutet, sowie Basen-Additionssalze dieser Verbindungen.

2. Anstrichstoff gemäss Anspruch 1, enthaltend einen Korrosionsinhibitor mit einer Gruppe der Formel I, worin einer der Substituenten R Wasserstoff, $C_1$-$C_4$-Alkyl, $C_1$-$C_4$-Alkoxy oder eine Aminogruppe ist und die drei anderen R Wasserstoff sind.

3. Anstrichstoff gemäss Anspruch 1, enthaltend einen Korrosionsinhibitor mit einer Gruppe der Formel I, worin jedes R Wasserstoff bedeutet.

4. Anstrichstoff gemäss Anspruch 1, worin die Komponente b) eine Dicarbonsäure oder deren Salz ist.

5. Anstrichstoff gemäss Anspruch 1, worin die Komponente b) eine Gruppe der Formel 1 enthält, die in Beta-Stellung zu einer Carboxylgruppe steht.

6. Anstrichstoff gemäss Anspruch 1, enthaltend als Komponente b) eine Verbindung der Formel II,

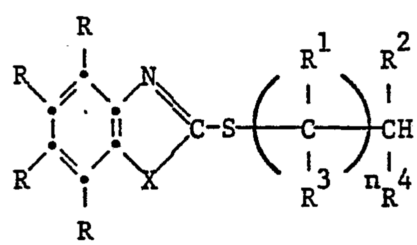
II

worin X und R die in Anspruch 1 gegebene Bedeutung haben,
n null oder 1 ist und
$R^1$, $R^2$, $R^3$, $R^4$ unabhängig voneinander Wasserstoff, Alkyl, Hydroxyalkyl, Halogenalkyl, Alkoxyalkyl, Carboxyalkyl, Carboxyl oder unsubstituiertes oder mono- oder disubstituiertes Phenyl oder Phenylalkyl bedeuten, oder $R^1$ und $R^2$ oder $R^1$ und $R^3$ zusammen unverzweigtes Alkylen bedeuten, das durch 1 oder 2 -COOH substituiert sein kann oder $R^1$ und $R^2$ zusammen eine direkte Bindung bedeuten, wobei mindestens zwei der Substituenten $R^1$, $R^2$, $R^3$, $R^4$ eine Carboxyl- oder Carboxyalkylgruppe sind, sowie Basen-Additionssalze.

7. Anstrichstoff gemäss Anspruch 6, dadurch gekennzeichnet, dass $R^1$, $R^2$, $R^3$ und $R^4$ Wasserstoff, $C_1$-$C_{18}$-

Alkyl, $C_2$-$C_{12}$-Carboxylalkyl, Carboxyl, Phenyl oder Benzyl sind, oder $R^1$ und $R^2$ zusammen Trioder Tetramethylen sind, welches durch $C_1$-$C_4$-Alkyl oder Carboxylgruppen substituiert sein können.

8. Anstrichstoff gemäss Anspruch 6, dadurch gekennzeichnet, dass in Formel II $R^1$, $R^2$, $R^3$ und $R^4$ unabhängig voneinander Wasserstoff, $C_1$-$C_4$-Alkyl, Carboxyl oder $C_2$-$C_6$-Carboxylalkyl sind.

9. Anstrichstoff gemäss Anspruch 1, worin die Komponente b) eine Verbindung der Formel

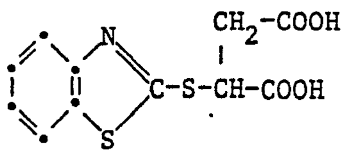

oder

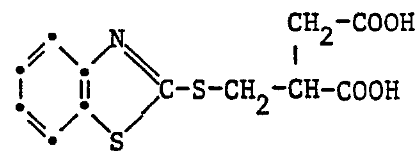

ist.

10. Anstrichstoff gemäss Anspruch 1, worin die Komponente b) als Salz eines Alkali- oder Erdalkalimetalls, eines Metalls der Gruppe IIB, IIIA oder VIII des periodischen Systems der Elemente, als Ammoniumsalz oder als Salz eines organischen Amins vorliegt.

11. Anstrichstoff gemäss Anspruch 10, worin die Komponente b) als Natrium-, Kalium-, Ammonium-, Calcium-, Magnesium-, Zink- oder Aluminiumsalz oder als Salz eines primären, sekundären oder tertiären Amins vorliegt.

12. Anstrichstoff gemäss Anspruch 1, enthaltend als Filmbildner a) ein wasserlösliches oder wasserdispergierbares synthetisches Polymer oder ein Gemisch solcher Polymere.

13. Anstrichstoff gemäss Anspruch 1, enthaltend als Filmbildner a) ein Alkyd-, Polyester-, Acryl-, Polyurethan-, Epoxid-, Phenol- oder Aminoplast-Harz, ein Mono- oder Copolymer eines Vinylethers, Vinylesters,von Styrol, Vinylidenchlorid oder Vinylchlorid.

14. Anstrichstoff gemäss Anspruch 1, enthaltend ausser den Komponenten a) und b) ein Pigment, einen Farbstoff, einen Füllstoff oder sonstige für Anstrichstoffe übliche Additive.

15. Anstrichstoff gemäss Anspruch 14, enthaltend einen basischen Füllstoff oder ein basisches Pigment.

16. Anstrichstoff gemäss Anspruch 14, enthaltend einen basischen Ionenaustauscher.

17. Anstrichstoff gemäss Anspruch 1, enthaltend ausser dem Korrosionsinhibitor b) einen oder mehrere weitere Korrosionsinhibitoren, die organische, metallorganische oder anorganische Verbindungen sein können.

18. Anstrichstoff gemäss Anspruch 1, enthaltend 0,1 bis 20 Gew.-% der Komponente b), bezogen auf den Feststoffgehalt des Anstrichstoffes.

19. Anstrichstoff gemäss Anspruch 1 enthaltend 0,5 bis 5 Gew.-% der Komponente b).

20. Verwendung eines Anstrichstoffes des Anspruchs 1 als Primer auf metallischen Substraten.

21. Verwendung gemäss Anspruch 20 als Primer auf Substraten aus Eisen, Stahl, Kupfer oder Aluminium.

22. Verwendung gemäss Anspruch 20 als Elektrotauchlack für die kathodische Elektroabscheidung.

## Claims

1. An aqueous corrosion-inhibiting coating composition containing

a) an aqueous film-former and

b) an the corrosion inhibitor, an effective amount of an aliphatic or cycloaliphatic di-, tri- or tetra-carboxylic acid which is substituted in its aliphatic or cycloaliphatic radical by at least one group of the formula I

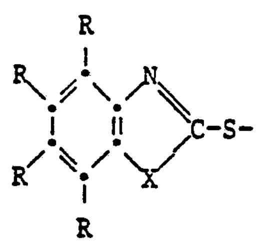

I

in which X is sulfur and each R independently of the others is hydrogen, alkyl, halogenoalkyl, alkoxy, alkylthio, alkylsulfonyl, cycloalkyl, phenyl, alkylphenyl, phenylalkyl, halogen, -CN, $-NO_2$, -COOH, -COOalkyl, -OH or a primary, secondary or tertiary amino or carbamoyl group, and also base addition salts of these compounds.

2. A coating composition according to claim 1, containing a corrosion inhibitor containing a group of the formula I in which one of the substituuents R is hydrogen, $C_1$-$C_4$alkyl, $C_1$-$C_4$alkoxy or an amino group and the other three Rs are hydrogen.

3. A coating composition according to claim 1, containing a corrosion inhibitor containing a group of the formula I in which each R is hydrogen.

4. A coating composition according to claim 1, in which the component b) is a dicarboxylic acid or a salt thereof.

5. A coating composition according to claim 1, in which the component b) contains a group of the formula I which is in the beta-position relative to a carboxyl group.

6. A coating composition according to claim 1, containing, as the component b), a compound of the formula II

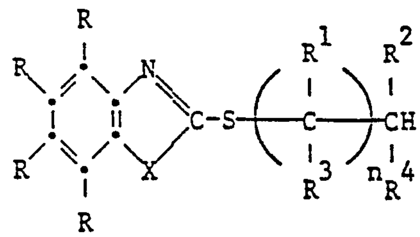

II

in which X and R are as defined in claim 1, n is zero or 1 and $R^1$, $R^2$, $R^3$ and $R^4$ independently of one another are hydrogen, alkyl, hydroxy alkyl, halogenoalkyl, alkoxyalkyl, carboxyalkyl, carboxyl or unsubstituted or monosubstituted or disubstituted phenyl or phenylalkyl, or $R^1$ and $R^2$ or $R^1$ and $R^3$ together are linear alkylene which can be substituted by 1 or 2 -COOH groups, or $R^1$ and $R^2$ together are a direct bond, at least two of the substituents $R^1$, $R^2$, $R^3$ and $R^4$ being a carboxyl or carboxyalkyl group, and also base addition salts.

7. A coating composition according to claim 6, wherein $R^1$, $R^2$, $R^3$ and $R^4$ are hydrogen, $Cl$-$C_{18}$alkyl, $C_2$-$C_{12}$carboxyalkyl, carboxyl, phenyl or benzyl, or $R^1$ and $R^2$ together are trimethylene or tetramethylene which can be substituted by $C_1$-$C_4$alkyl or by carboxyl groups.

8. A coating composition according to claim 6, wherein $R^1$, $R^2$, $R^3$ and $R^4$ in formula II independently of one another are hydrogen, $C_1$-$C_4$alkyl, carboxyl or $C_2$-$C_6$carboxyalkyl.

9. A coating composition according to claim 1, in which the component b) is a compound of the formula

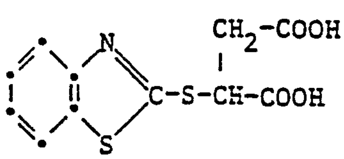

or

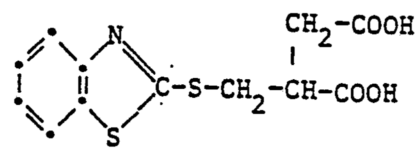

10. A coating composition according to claim 1, in which the component b) is present as the salt of an alkali metal or alkaline earth metal or a metal of group IIB, IIIA or VIII of the periodic system of the elements, as an ammonium salt or as the salt of an organic amine.

11. A coating composition according to claim 10, in which the component b) is present as a sodium, potassium, ammonium, calcium, magnesium, zinc or aluminium salt or as the salt of a primary, secondary or tertiary amine.

12. A coating composition according to claim 1, containing as film-former a) a water-soluble or water-dispersible synthetic polymer or a mixture of such polymers.

13. A coating composition according to claim 1, containing as film-former a) an alkyd, polyester, acrylic, polyurethane, epoxy, phenolic or aminoplast resin or a homo- or copolymer of a vinyl ether, a vinyl ester, styrene, vinylidene chloride or vinyl chloride.

14. A coating composition according to claim 1, containing, in addition to components a) and b), a pigment, a dye, an extender or other additives customary for coating compositions.

15. A coating composition according to claim 14, containing a basic extender or a basic pigment.

16. A coating composition according to claim 14, containing a basic ion exchanger.

17. A coating composition according to claim 1, containing, besides the corrosion inhibitor b), one or more further corrosion inhibitors which can be organic, metal-organic or inorganic compounds.

18. A coating composition according to claim 1, containing 0,1 to 20 % by weight of the component b), based on the solids content of the coating composition.

19. A coating composition according to claim 1, containing 0,5 to 5 % by weight of the component b).

20. The use of a coating composition of claim 1 as a primer on metallic substrates.

21. The use according to claim 20 as a primer on substrates composed of iron, steel, copper or aluminium.

22. The use according to claim 20 as an electrocoating paint for cathodic electrodeposition.

**Revendications**

1. Peinture aqueuse anticorrosion qui contient:
a) un feuillogène aqueux et

b) comme inhibiteur de corrosion, une quantité efficace d'un acide di-, tri- ou tétra-carboxylique aliphatique ou cycloaliphatique qui porte, sur son radical aliphatique ou cycloaliphatique, au moins un radical répondant à la formule I:

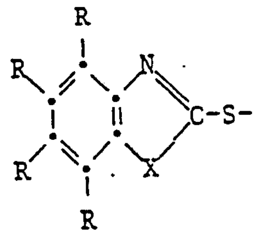

I

dans laquelle X représente le soufre et les R représentent chacun, indépendamment les uns des autres, l'hydrogène, un alkyle, un halogéno-alkyle, un alcoxy, un alkylthio, un alkylsulfonyle, un cycloalkyle, un phényle, un alkylphényle, un phénylalkyle, un halogène, -CN, $-NO_2$, -COOH, -COOAlkyl, -OH, un radical amino primaire, secondaire ou tertiaire ou un radical carbamoyle,

ou d'un sel formé par addition d'un tel composé avec une base.

2. Peinture selon la revendication 1 qui contient un inhibiteur de corrosion portant un radical de formule I dans lequel l'un des symboles R représente l'hydrogène, un alkyle en $C_1$-$C_4$, un alcoxy en $C_1$-$C_4$ ou un radical amino et les trois autres symboles R représentent chacun l'hydrogène.

3. Peinture selon la revendication 1 qui contient un inhibiteur de corrosion porteur d'un radical de formule I dans lequel chacun des symboles R représente l'hydrogène.

4. Peinture selon la revendication 1 dans laquelle la composante b) est un acide dicarboxylique ou un sel d'un tel acide.

5. Peinture selon la revendication 1 dans laquelle la composante b) contient un radical de formule I qui se trouve à la position β par rapport à un radical carboxy.

6. Peinture selon la revendication 1 qui contient, comme composante b), un composé répondant à la formule II:

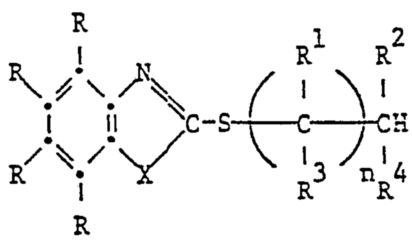

II

dans laquelle:

X et R ont les significations qui leur ont été données à la revendication 1,

n est égal à 0 ou à 1 et

$R^1$, $R^2$, $R^3$ et $R^4$ représentent chacun, indépendamment les uns des autres, l'hydrogène, un alkyle, un hydroxyalkyle, un halogeno-alkyle, un alcoxy-alkyle, un carboxy-alkyle, un carboxy ou un radical phényle ou phénylalkyle non substitué ou porteur d'un ou de deux substituants, ou

$R^1$ et $R^2$ ou $R^1$ et $R^3$, représentent ensemble un alkylène non ramifié qui peut porter un ou deux radicaux -COOH,

ou

$R^1$ et $R^2$ forment ensemble une liaison directe, et au moins deux des symboles $R^1$, $R^2$, $R^3$ ou $R^4$ représentent un radical carboxy ou carboxy-alkyle,

ou un sel d'addition formé par un tel composé avec une base.

7. Peinture selon la revendication 6 caractérisée en ce que $R^1$, $R^2$, $R^3$ et $R^4$ représentent chacun l'hydrogène, un alkyle en $C_1$-$C_{18}$, un carboxy-alkyle en $C_2$-$C_{12}$, un carboxy, un phényle ou un benzyle, ou $R^1$ et $R^2$ forment ensemble un radical tri- ou tétra-méthylène qui peut porter des alkyles en $C_1$-$C_4$ ou des carboxy.

8. Peinture selon la revendication 6 caractérisée en ce que, dans la formule II, $R^1$, $R^2$, $R^3$ et $R^4$ représentent chacun, indépendamment les uns des autres, l'hydrogène, un alkyle en $C_1$-$C_4$, un carboxy ou un carboxy-alkyle en $C_2$-$C_6$.

9. Peinture selon la revendication 1 dans laquelle la composante b) est un composé répondant à l'une ou à l'autre des formule suivantes:

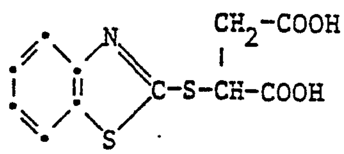

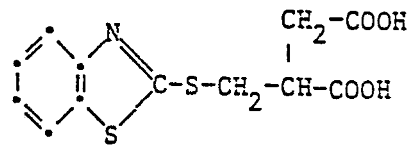

10. Peinture selon la revendication 1 dans laquelle la composante b) se trouve sous la forme d'un sel d'un métal alcalin, d'un métal alcalino-terreux, d'un métal d'un des groupes IIB, IIIA et VIII de la classification périodique des éléments, d'un sel d'ammonium ou d'un sel dérivant d'une amine organique.

11. Peinture selon la revendication 10 dans laquelle la composante b) se trouve sous la forme d'un sel de sodium, de potassium, d'ammonium, de calcium, de magnésium, de zinc ou d'aluminium ou d'un sel d'une amine primaire, secondaire ou tertiaire.

12. Peinture selon la revendication 1 qui contient, comme feuillogène a), un polymère synthétique soluble dans l'eau ou dispersable dans l'eau ou un mélange de polymères de ce genre.

13. Peinture selon la revendication 1 qui contient, comme feuillogène a), une résine alkyde, une résine de polyester, une résine acrylique, une résine de polyuréthanne, une résine époxydique, une résine phénolique ou une résine aminoplaste, ou un homopolymère ou copolymère d'un éther vinylique, d'un ester vinylique, du styrène, du chlorure de vinylidène ou du chlorure de vinyle.

14. Peinture selon la revendication 1 qui, en plus des composantes a) et b), contient un pigment, un colorant, une charge ou d'autres additifs usuels pour des peintures.

15. Peinture selon la revendication 14 qui contient une charge basique ou un pigment basique.

16. Peinture selon la revendication 14 qui contient un échangeur d'ions basique.

17. Peinture selon la revendication 1 qui, en plus de l'inhibiteur de corrosion b), contient un ou plusieurs autres inhibiteurs de corrosion qui peuvent être des composés organiques, organométalliques ou minéraux.

18. Peinture selon la revendication 1 qui contient de 0,1 à 20 % en poids de la composante b) par rapport à la quantité totale de matière solide contenue dans la peinture.

19. Peinture selon la revendication 1 qui contient de 0,5 à 5 % en poids de la composant b).

20. Application d'une peinture selon la revendication 1 comme peinture de fond pour substrats métalliques.

21. Application selon la revendication 20 comme peinture de fond pour substrats en fer, en acier, en cuivre ou en aluminium.

22. Application selon la revendication 20 comme peinture électrophorétique pour l'électrodéposition cathodique.